# EUROPEAN PATENT SPECIFICATION

(11) **EP 1 641 218 B1**
(45) Date of publication and mention of the grant of the patent: **07.03.2007**
(21) Application number: 05108118.0
(22) Date of filing: 05.09.2005
(51) Int. Cl.: H04L 29/08

(54) **System and method for dynamic task scheduling depending on the location of a mobile user**
System und Verfahren zur dynamischen Planung von Aufgaben in Abhängigkeit von der Position eines mobilen Benutzers
Système et méthode pour planification dynamique de taches en fonction d'emplacement d'utilisateur mobile

(30) Priority: 27.09.2004 EP 04300627
(43) Date of publication of application: 29.03.2006
(73) Proprietor: International Business Machines Corporation, Armonk, NY 10504 (US)
(72) Inventor: MEBED, Amr, Dokki, Giza (EG); INCERTIS CARRO, Fernando, 46182, VALENCIA (ES)
(74) Representative: Etorre, Yves Nicolas

(56) References cited:
- WO-A-20/04043100
- US-A1- 2002 038 234

## Description

### Field of the invention

The present invention relates to personal electronic calendars, schedulers, and tasking systems and, more particularly to a method, system, and computer program for automatically scheduling tasks according to events or conditions occurring in the vicinity of a mobile user.

### Background of the invention

Portable computing devices, such as cellular phones, hand held computers, palm devices, etc., have become increasingly popular in recent years. The technology has advanced to such a degree that now people can access the Internet through the wireless technology (such as a cellular phone or personal digital assistant (PDA)), and can have access to content especially tailored for small portable devices.

With the increased reliance on mobile, pervasive computing, software applications designed to enhance the efficiency, productivity or comfort of mobile users have evolved. Some of the most popular mobile applications for such wireless devices, such as mobile phones or WAP (Wireless Application Protocol), include personal information managers (PIMs), entertainment programs, financial services, and commercial services.

An Increasing number of applications in the field of mobile communications, use information related to the position of mobile communication devices. For example, emergency services require the location of the caller. Commercial applications, too, make use of the caller's location in order to determine the services or information to offer. Some applications simply provide the caller with information about the nearest shop, restaurant or gas station. Other applications are complex, for instance a billing system, for differentially charging a user for a service depending on his whereabouts. To provide location-based services to a mobile user, the location of this user must be determined beforehand. In the field of mobile telephony for instance, the most basic information concerning the position of the mobile device position, is the location of the cell or sector radio mast which is handling the call (e.g., derived from cell or transceiver identification code, or cell-ID). This mast is usually the closest radio mast. This estimation can be further refined according to the signal strength or the direction, if directional antennae are employed. Various alternatives may offer more accuracy, like:
- triangulation based on directional signals from several masts, or
- on distance estimates derived from
   - signal strengths, or
   - transmission times to several masts.
Even more accurate position information may be available from the mobile device itself if the mobile device is equipped with a GPS (Global Positioning System). However, the use of a GPS requires additional hardware and software to contact the necessary geostationary GPS satellites.

One particularly important type of personal application that has emerged is the electronic calendar, or personal information and time manager. Lotus Organizer ^{™} (Lotus Organizer is a registered trademark of Lotus Development Corporation), is an example of a popular electronic, personal information, and time manager for scheduling appointments, maintaining address lists, managing contacts, tracking to-dos, and more. Lotus Organizer's ^{™} daybook-style user interface makes it easy to use, however, there are practical and functional limitations to its capabilities. To maintain of updated calendar and agenda schedules requires heavy interactions from the user to enter data. Other electronic calendars exist and also are subject to similar functional limitations. According to prior art, updating schedules is a time-consuming task that often involves many iterations. Schedules may either fail to accommodate rules or conditions beyond rudimentary duration requirements or may require significant manual input to handle exceptions or variable conditions.

If the scheduling of daily tasks is crucial for a static, sedentary user, it becomes a more complex matter for a nomadic, mobile user since convenient times for performing many activities are affected by location related events or conditions. For a mobile user, the *"location"* is an important factor, in addition to the *"time"* factor. A mobile user must schedule tasks that must be executed at a particular time and place, regularly, or upon the occurrence of other events or under certain environmental conditions.

Generally speaking, there are two main types of schedules:
- *"time-based schedules"* (prefixed in time or periodic) and
- *"rule-based schedules"* (governed by formulas, algorithms, sensed conditions, etc.).
There are also *"event-driven* tasks" (tasks that become active under certain events or conditions). Now, as a mobile user goes to different places, performs different activities on different locations, and communicates to different remote locations, the scheduling of daily user activities may be affected and may be modified by the occurrence of many different possible location related events or conditions. Some events or conditions are deterministic and predictable, most of them, even observable and measurable, are non deterministic and unpredictable. In fact, in the course of a day, a mobile user is subject:
- to independent, predictable deterministic, location dependent events, such as sunrise and sunset times,
- to events that are unknown for the user, even if these events are programmed in advance (such as the occurrence of a public event in a city), and
- in many more cases, to not-predictable (random) events, such as a traffic jam or other common natural conditions, such as the weather conditions (temperature, wind, rain, fog, etc,).

For instance, we can consider the case of a person arriving late in the night to a remote fishing resort. This person may wish to wake-up the next day at dawn, say 30 minutes before sunrise time, but, if at that early time it is raining or if there is a fog, or if other weather conditions are not good enough for sailing or fishing, he could prefer not be waked at this early time in the morning, but instead to rest and sleep until 8:00 a.m.

This simple example illustrates how the scheduling of a simple user activity, such as *"wake me up tomorrow morning",* may depend on both :
- a predictable physical phenomenon (i.e., the sunrise time, for a particular date and location), and
- a non predictable (or only partially predictable) physical phenomenon (i.e., the weather conditions at the actual user's location).

As everybody knows by experience, mobile users are subject to many varying circumstances like those described in the foregoing example. For this reason, mobile users frequently opt for *"conservative"* schedules based on the *"worst case"* and frequently adapt or modify already planed schedules. In many cases, these modifications are based on outdated or incomplete knowledge of the events or conditions prevailing on visited locations.

Thus, there is a need for more fully exploiting the wireless computing technology in order to extend the utility of location based services to the opportunistic scheduling of mobile users activities.

There is a need to provide mobile users with the capability of automatically scheduling, depending on particular events or conditions that may occur on the actual user location, tasks for which time schedules have not been yet assigned (non scheduled tasks).

There is also a need to provide mobile users with the capability of automatically rescheduling, altering or canceling previously scheduled tasks (i.e., for which time schedules have been already assigned), depending on information gathered about the occurrence of certain events or conditions related to the actual user location.

US Patent Application US 2002/0038234 Fu et al. entitled "System and methods for scheduling and tracking events across multiple time zones" discloses an electronic Personal Information Manager (PIM) including a calendar/scheduling system with an EarthTime(TM) module. In operation, the system tracks different types of times: "local" time, "home" time, and "remote" time. Home time is the time zone of where the user typically spends most of his or her time; this is usually the time zone for the user's home office. Local time is the time for the locality where the user is located physically at any particular instance in time. "Remote" time represents the time zones of the other individuals (i.e., other than the user). The system may show events and appointments in the user's own "local" time (or other user-selected type of time), regardless of where the user is presently located. Using these three types of time (i.e., "local" time, "home" time, and "remote" time), the system provides improved interface and methods for scheduling and managing activities, such a phone conference, across multiple time zones.

International application WO 2004/043100 Borjesson Henrik entitled "DEVICE AND METHOD FOR GENERATING AN ALERT SIGNAL" discloses a device and method for generating an alert signal based on the geographical position of the device, optionally also based on time or date. The alert signal is generated when the device is within a certain distance from a predefined location taking into account the fact that certain tasks or actions can only be taken when the user is at this location. Thus, the invention provides a device for generating an alert signal comprising: positioning means for updating and storing an actual position of the device; location storage means for storing the location of a place of interest; means for storing a request for an alert signal associated with the location of a place of interest; and trigger means for comparing the actual position of the device with the location of a place of interest and triggering generation of said alert signal when the distance between the actual position of the device and the location of a place of interest is less than a predetermined value. The device is suitably a mobile telephone.

### Objects of the invention

It is therefore a broad object of the invention to dynamically and automatically schedule and reschedule users tasks according to events or conditions depending on the user location.

It is another object of the invention to correlate location related data with the scheduling of activities, so that activities scheduled by users could be rescheduled, altered or canceled depending on users predefined rules and criteria.

### Summary of the invention

The present invention is directed to a system and method as defined in independent claims for scheduling and rescheduling tasks or activities on a calendar or agenda of a mobile user based on events (e.g., sunset time) or conditions (e.g., traffic conditions or meteorological conditions) related to the mobile user's location.

The system according to the present invention includes :
- a location determination system configured to determine a geographic location of a user,
- an automated personal notification system configured to automatically transmit a structured, personalized, user environment notification message. This message is based on the geographic location the user, and
- an automated personal scheduling system that parses and processes, on the user's terminal, the received user environment notification messages used to schedule (or reschedule) the user's tasks.

Another aspect of the present invention is a method and computer program for use in a mobile user device, for automatically scheduling & rescheduling tasks based on information (computed or acquired) about the current user's physical location.

The present invention comprises the main following steps :
- starting the process of scheduling tasks as a result of a user input or an event;
- if the user's location has changed, determining the new location coordinates;
- for each task condition,
   - determining the task parameters related to the user's location;
   - determining according these task parameters, whether or not the task condition is met;
- scheduling tasks for which the associated conditions are met;
- rescheduling time for conflicting tasks based on the priority assigned to each task;
- performing the scheduled tasks on time.

Further embodiments of the invention are provided in the appended dependent claims.

The foregoing, together with other objects, features, and advantages of this invention can be better appreciated with reference to the following specification, claims and drawings.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:
- **Figure 1** shows the main components of the invention.
- **Figure 2** shows how, according to the present invention, a user defines a task; for instance a task scheduled to be performed at the "sun set" time at the place where the user is situated.
- **Figure 3** shows a user's calendar comprising mobile and fixed tasks scheduled by the user according to the present invention.
- **Figure 4** illustrates how, when a user moves to a new location, the schedule of both mobile and fixed tasks is automatically adjusted based on the new location and new time zone, according to the present invention.
- **Figure 5** shows a view of a user's calendar after the automatically reschedule of conflicting tasks, according to the present invention.
- **Figure 6** shows the scheduling of Islamic prayer times for a mobile user, according to the present invention.
- **Figure 7** illustrates the method for scheduling tasks for a mobile user according to the present invention.

### Preferred embodiment of the invention

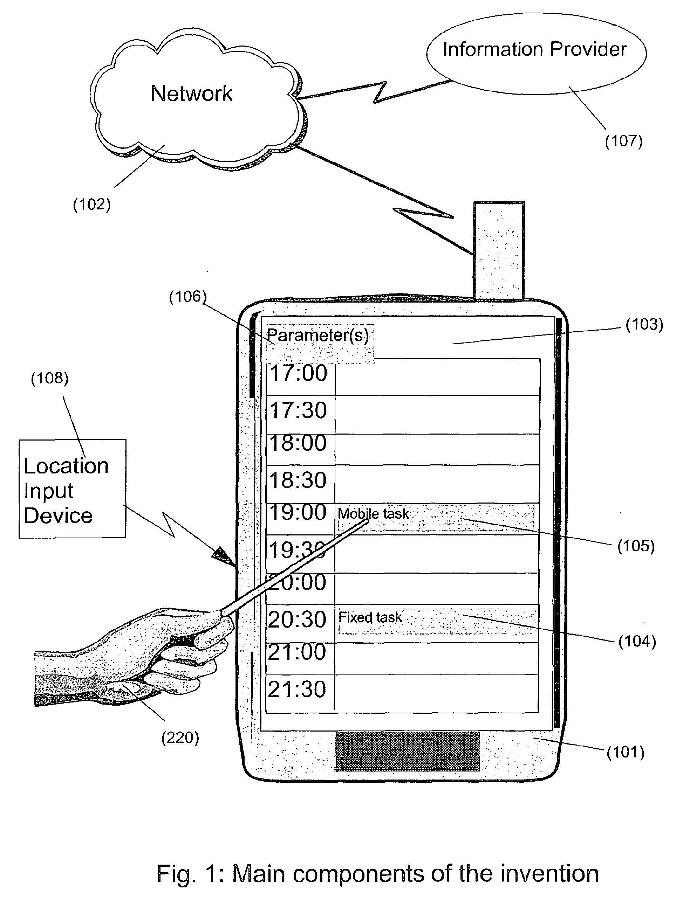

As shown in Figure 1, the present invention is directed to a system and method for automatically scheduling tasks (activities) of a mobile user based on information (computed or acquired) related to events or conditions dependent on the mobile user's location. In a preferred embodiment of the present invention, a user (120) using both a mobile device (101) and a personal scheduling management system (103), can:
- define tasks (activities), these tasks can be by nature:
   - fixed (time assigned), or
   - mobile (dependent on the user's physical location);
- automatically (e.g, when the user moves to a new location), or even manually (i.e., under the user's request) adjust or reschedule defined tasks; and
- view the automatically adjusted schedule of tasks based on the user's current geographic location.

### Fixed and mobile tasks

The personal scheduling management system (103) according to the present invention is based on two types of tasks:
- Fixed tasks (104) which are time assigned tasks that have a fixed starting time and duration (for instance "meetings" ,"phone calls", etc.).
- Mobile tasks (105) that are tasks depending on the user's physical location. The starting time of a mobile task is based on the user's physical location and on information that is computed or information that is acquired from an information provider (107) via a communications data network (102). The duration of a mobile task can be computed, acquired or fixed. Examples of mobile tasks include sun rise or sun set time programed activities, Islamic prayer times, etc.

A mobile device (101) identifies its current physical location from parameter(s) (106) that are transmitted to it via the communications network (102). The mobile device can use the CELL ID of a GSM network, or a GPS system (108). The current location parameters (106) or the name of the corresponding physical location can then be displayed (106) on the mobile device (101).

When the user moves from one place to another place, the personal scheduling management system reschedules all the mobile tasks according to the place where the user is situated. The personal scheduling management system then automatically reschedules conflicting activities based on their priority so that a new adjusted schedule of tasks is created. The automatic scheduling of tasks for a mobile user is illustrated in examples 1 and 2.

### Scheduling of mobile tasks

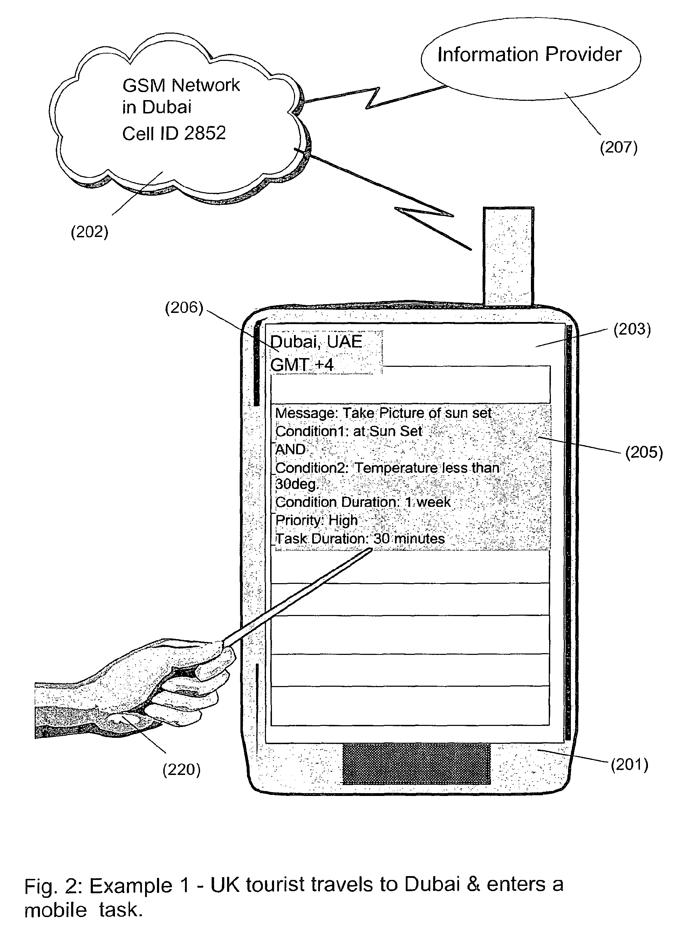

Figures 2 to 5 illustrate a first scenario in which the personal scheduling management system carried by an English tourist traveling in the Middle East, automatically adjusts schedules based on the locations he visits. The tourist intends to travel to Dubai, United Arab Emirates and then to Cairo, Egypt and, in each location, wants to take photos of sunset and call home in England at around 16:00 GMT everyday. The tourist don't likes to go out in hot weather, so he determines to take sun set pictures only if the ambient temperature is under 30 degrees Celsius.

Figure 2 shows the tourist (i.e., the user) (220) with a mobile device (201) comprising a personal scheduling management system (203). In the present example, the tourist defines the mobile task (205) with the following parameters :
- *"Message"* that is the text that will be displayed to identify this task to the user.
- *"Conditions"* are the set of conditions that have to be met in order to schedule the task (in the present case the conditions required to perform this task are the following : the sun set at the place where the tourist is situated, and an ambient temperature below 30 degrees Celsius).
- *"Condition duration"* is the validity of the conditions since their creation date (in this case it means that the conditions must apply only for the next week)
- *"Priority"* of the task. Different scheduling actions can be taken on a task depending on its priority, for example if there is a time conflict between tasks then a task with a higher priority must have a better chance to be scheduled on time than a task of a lower priority which might be shifted to a later time.
- *"Task duration"* is the validity of the task itself, while the above "Conditions" are met (in the present case when the sun sets and when the ambient temperature is under 30 degrees Celsius, the task is scheduled for a time period of 30 minutes).

In order to complete the schedule of the mobile task *"take picture at sunset",* the physical location of the user has to be known since sunset and outdoors temperature are both dependent on the current physical location of the user. In this example the mobile device (201) is connected to a GSM network (202). From the GSM network, the mobile device retrieves information about the current country and collect the CELL-IDs of the current location. From a database which associates CELL-IDs and locations, different location parameters (206) can be retrieved. The location parameters include for example :
- location name,
- longitude & latitude, and
- location time zone.

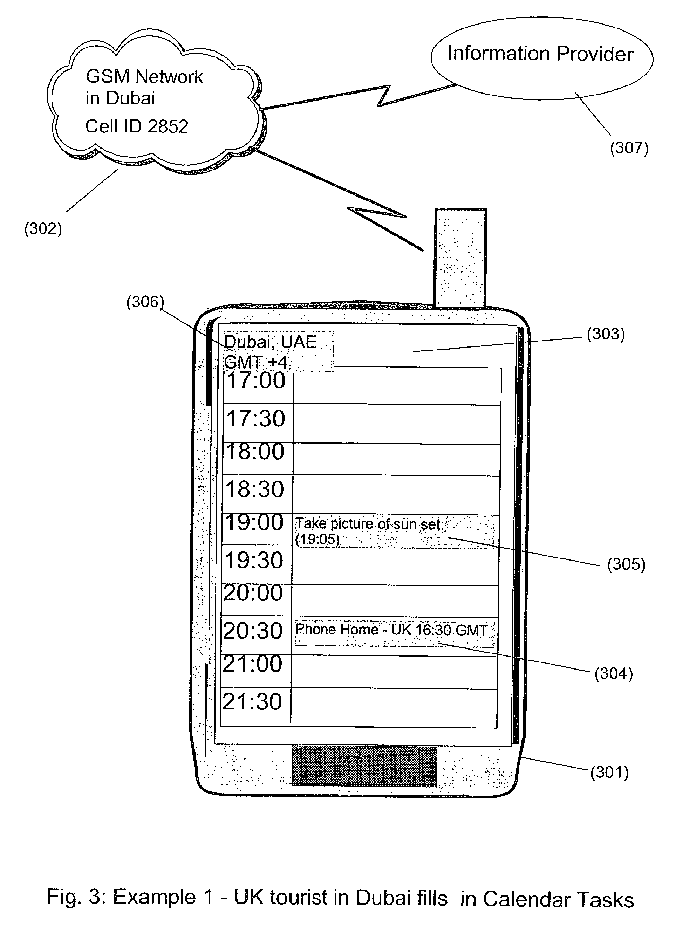

Based on the current location parameters, the sunset time can be calculated. The weather information for the current location, can be retrieved from an information provider (207) via the communication network (202). Thus it is possible to determine if the conditions of the task (sunset and ambient temperature under 30 degrees Celsius) are met or not. If the task conditions are fulfilled, then the task is scheduled as shown in Figure 3.

### Scheduling of multiple tasks

Figure 3 shows that the user has already defined another task (304), namely to *"phone home".* In this case the task is a *"local time fixed task".* A local time fixed task is a task with a fixed starting time and duration. In the present example, this task has been scheduled to take place daily at 16:30 GMT (UK time).

Figure 3 shows the scheduling by the personal scheduling management system of both the fixed task (304) and the mobile task (305):
- The fixed task (304) is, in the present example, for the tourist to *"phone home"* at around 16:30 GMT; which is 20:30 in Dubai local time.
- The mobile task (305) is to *"take a picture of sunset".* The process to define this task has already been described in Figure 2. In this example, in Dubai where the user is located, the *"sunset"* will happen at around 19:05 and actual weather data in this location indicate that ambient temperature is under the limit of 30 degrees Celsius, so that the task is scheduled to take place accordingly, as shown in this figure.

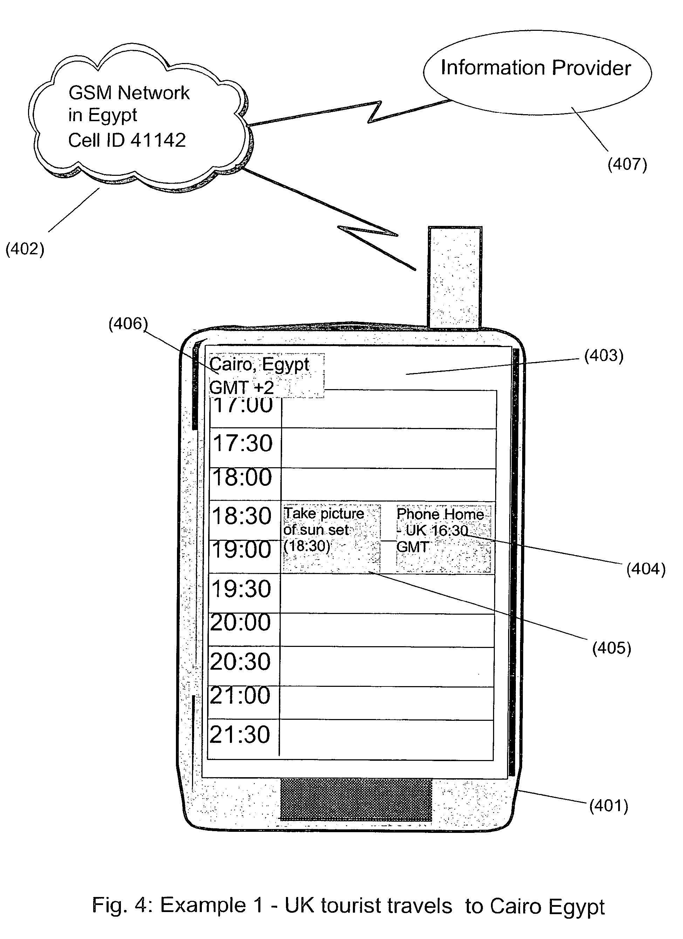

Figure 4 shows that the user (tourist) has traveled from Dubai to Cairo, Egypt. The user tasks are still valid :
- to *"phone home"* at around 16:30 GMT (404), because this task has been scheduled to take place daily at 16:30 GMT.
- to *"take a picture of sunset"* (405), because the *"Condition duration"* (205) has a validity of one week.

When the user (tourist) reaches the Cairo city neighborhood, the mobile device (401) detects a different GSM network CELL-ID (402) and figure out the new location. This new situation leads the scheduling management system to reschedule the tasks according to the new location. The scheduling management system checks the validity (conditions) of each task in order to reschedule these task at the new location with the programed rules and priorities.

For the mobile task *"Take picture at sunset"* in Cairo city, the scheduling management system :
- Gets the CELL-ID from the GSM Network (402) to determine the actual user's location.
- Retrieves for the current location the location parameters; longitude, latitude and time zone. These parameters will be used to compute the sunset time in Cairo city which is a condition for scheduling the task. In the example illustrated in Figure 4, for today, the computed sunset time for Cairo city is 18:30 local (i.e., Cairo city) time.
- Retrieves from an *"information provider"* (407) the weather information in Cairo's region. Assuming that the weather temperature is under 30 degrees Celsius, then the task *"Take picture at sunset"* is scheduled for 18:30, Cairo local time (405).

Figure 4 also shows how the fixed task *"phone home"* (404) which must take place daily at 16:30 GMT (England time), is scheduled at 18:30 Cairo local time.

In this case, both the mobile (405) task (which depends on the location and date) and the fixed (404) task (fixed to a specific local time) are scheduled, due to the user mobility, at the same local time, which results in a scheduling conflict.

### Scheduling conflicts

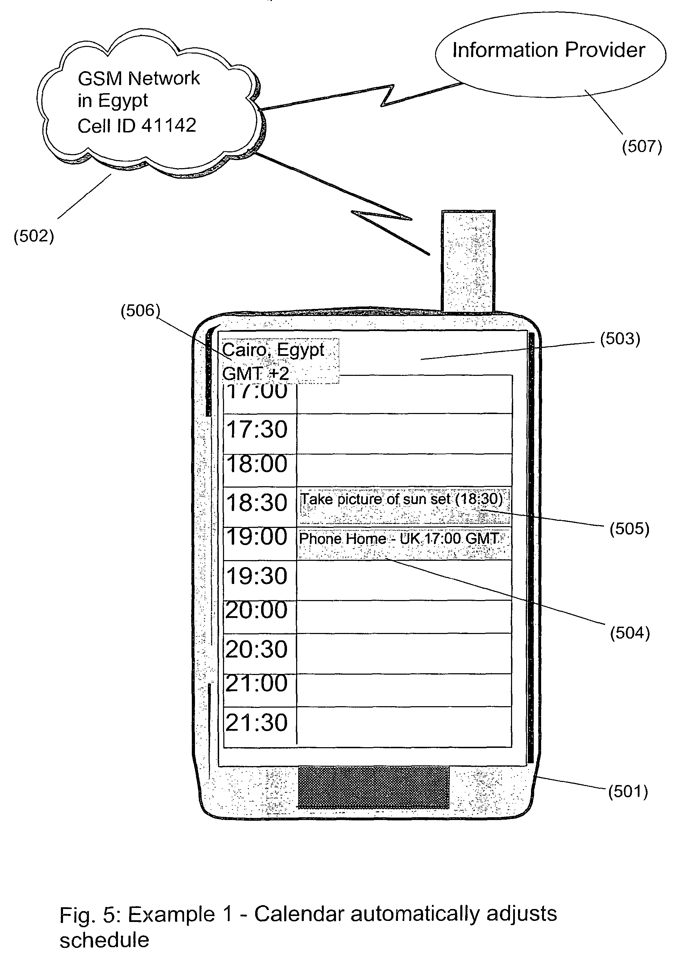

As shown in Figure 5, in order to overcome the scheduling conflict, the scheduling management system of the invention reschedules the tasks according to their respective priority. If the user has assigned a *"Priority: High"* (205) to the mobile task (505),
- the mobile task is scheduled to take place at the computed (i.e., date/location dependent) time and
- the fixed task (504) (which has a lower priority) is shifted to a later time.
As illustrated in Figure 5, the automatic rescheduling of the tasks leads to the following result :
- the *"Take picture of sunset"* task (505) is scheduled to take place at 18:30, Cairo local time,
- the *"phone home"* (504) task is scheduled to take place at 19:00, Cairo local time.

When the user (tourist) travels from Dubai to Cairo, the personal scheduling management system monitors and automatically reschedules all the user's tasks according to the user's current physical location and conditions.

### Particular application

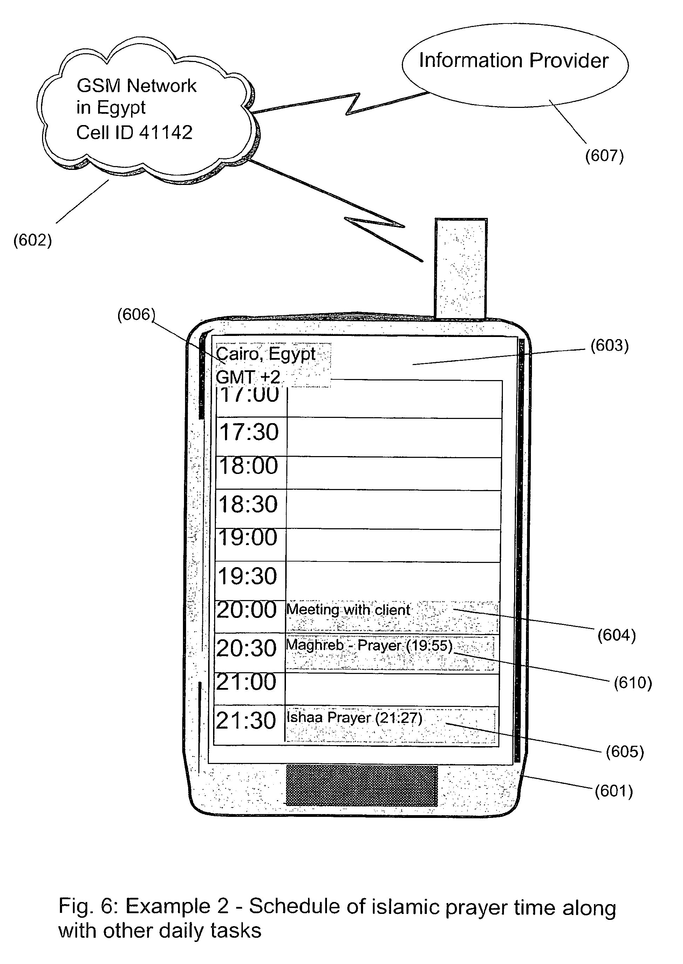

Figure 6 illustrates another application of the invention, in which the disclosed personal scheduling management system is used to automatically reschedule astronomically determined daily tasks, such as for example, Islamic prayer times.

There are five prayers per day in Islam. Each prayer has a starting and ending *"time slot",* this is the time into which the prayer must be performed. The *"time slot"* for each prayer is defined according to the position of the sun. For example the *"Maghreb"* prayer takes place at sunset when the angle of the sun is around 0.83 degrees under the horizon, while the next prayer, *"Ishaa" prayer,* takes place after sunset when the angle of the sun reaches 17.5 under the horizon. The *"time slot"* for the *"Maghreb"* prayer is thus from the time the sun reaches 0.833 degrees till the sun reaches 17.5 degrees under the horizon *("Ishaa prayer"* time). The prayer time depends on the sun position which varies along the year (the year's date) and on the location of the person on the earth.

The personal scheduling management system defines the praying times as mobile tasks. Each mobile tasks has a time slot in which the task must be completed : this time slot is the *"task condition duration"* (for instance, the *"Maghreb"* prayer can be done from 19:55 till 21:27 from a given date on a location). The praying time itself takes about 10 minutes *("task duration" -* this is the time it takes the person to pray).

In the example shown in this figure, the user has allowed the personal management system to automatically schedule the praying time in order to fit with the daily tasks of the user.

Figure 6 shows that the user has scheduled a meeting with a client at 20:00 for a duration of half an hour. This overlaps with the *"Maghreb"* prayer which starts at 19:55. Since the *"Maghreb"* prayer can be performed anytime till 21:27 (which is the time of the next prayer) and the meeting is scheduled to finish at 20:30, then the personal management system will automatically schedule the *"Maghreb"* prayer task to take place after the meeting ends.

The above scenario applies when the user moves from one location to the other and the praying time changes according to the new physical location. In this case the personal management system automatically updates the schedule of prayers according to the new physical location to fit with other pre-scheduled tasks.

### Method of scheduling mobile tasks

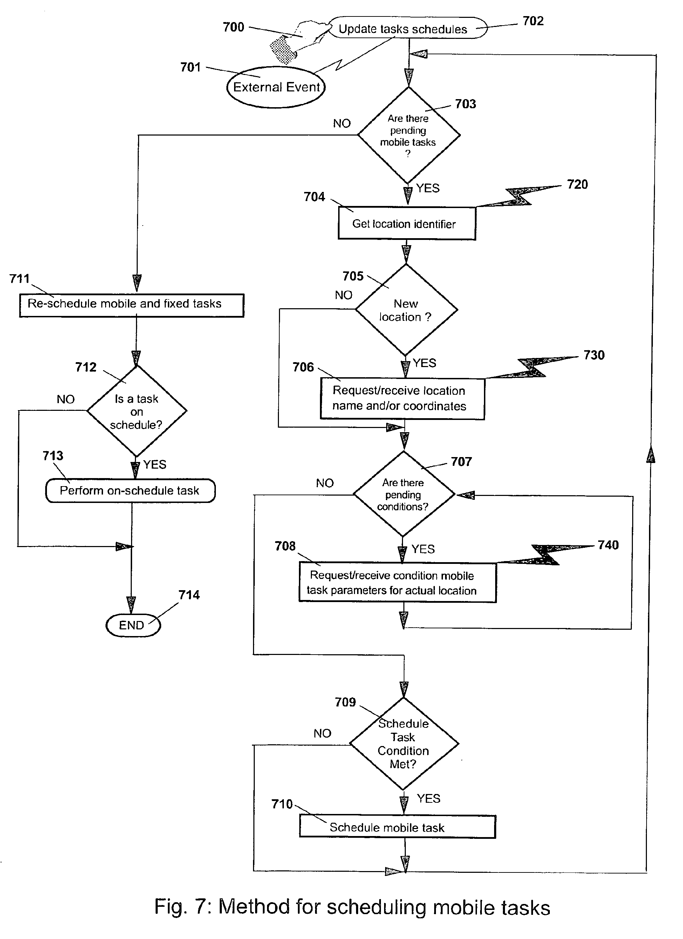

Figure 7 is a flow chart of the method for scheduling mobile tasks. The process of updating task schedules starts when either a user (700) manually defines or updates a task, or when an "event" (701) occurs as a result of an external phenomenon such as a mobile phone CELL-ID change.

Applying the *"English tourist"* example shown in Figure 2, the process of scheduling a mobile task starts when the tourist defines a task or when the CELL-ID of his mobile phone changes.

Once initiated the process of updating task schedules, each mobile task that has not already been processed (703) is checked to determine whether or not the location has changed (705). Since the task requires the knowledge of the current physical location, a *"get location identifier"* (704) command must be send (720) to the communication network, or to a location input device to obtain the required information. The *"location identifier"* (720) can be the CELL-ID of the GSM network.

From the received updated *"location identifier"* (704), the process determines whether or not the user has moved to a new location (705).
- If the user has moved to a new location, then the coordinates (706) of the new location (which includes longitude, latitude, location name and time zone) must be retrieved. Retrieving (730) the new location coordinates can be performed via a local database that associates the *"location identifier"* with the *"location coordinates"* or via an information provider (107) accessible through the network (102).
- If the user has not moved to a new location, then there is no need to retrieve again the *"location coordinates",* since they are already known.

The next step of the method (707) consist in checking if there are any pending task conditions. As illustrated on Figure 2, the task conditions of a mobile task (205) can be :
- Computed conditions. For example *"Condition 1: at sunset"* (205) can be calculated via an algorithm based on the current physical position of the user and the date of the year.
- Information dependent conditions. The information can be provided via an information provider (207). For example in *"Condition 2*: *Temperature less than 30 degrees",* the outside temperature on the user's current physical location is needed, and can be measured, or retrieved from an information provider (207) via the communications network (202).

Depending on each condition (708) the required parameters are either manually entered by the user, or measured, computed or retrieved (740) from an information provider.

In order to schedule a mobile task, the *"task conditions"* of the task must be met (709). After resolving all the task conditions, the conditions will be applied logically (AND, OR, IF-ELSE) together and the result will determine whether the task conditions are met or not (709). As illustrated in the example illustrated in Figure 2, the *"temperature* (must be) *less than 30 degrees"* in order to schedule the task *"Take pictures at sunset"* at *"sunset time"* (i.e., when the condition *"sunset time"* is met). If the task condition *"temperature less than 30 degrees"* is not fulfilled the task *"Take pictures at sunset"* will not be scheduled.

If the task conditions are met then the task is scheduled (710) otherwise the task is not scheduled.

The process goes back again to recheck (703) if there are any pending mobile tasks that have not been processed. After all the tasks have been processed, the next step is to reschedule (711) all tasks that have a schedule time conflict. The reschedule depends on the priority assigned to the task and is intended to provide a feasible agenda to the user.

In the next step, each task is checked against its schedule (712) and tasks that are on schedule will then perform the appropriate action (713). Actions can be of any kind, such as displaying a message, sound alarm, call a number, etc.

This is the last step (714) of the process of updating task schedules for the mobile tasks.

### Alternate applications

Several alternate applications exist. Some are described here below. Each of these applications basically use the same previously described method and system.

### Tide prediction

*"People going into or out* of a *harbor, or anchoring near* a *shore, need to know in advance about the behavior of the tide. "*
***http:*//*www.math.sunysb.edul~tony*/*tides*/** ,Tony Phillips,Math Dept SUNY Stony Brook.

Based on the height of tide at the ship's current location, a particular activity can be scheduled. This activity can be also rescheduled to a different time or another day for example, if the height of tide is too high to go shipping.

### Hunting

Animal movement is sometimes related to the moon's phase (New moon, Full moon, etc) and temperature. It could be better to schedule hunting based on the phase of the moon and on the temperature, which are dependent on the hunter's location on earth. An example illustrating how deer movement depends on moon phase could be found in: ***http:llwww.ncdeer.com*/*nc*_moon_ *02.html***

### Schedule Islamic Prayer Times

As already mentioned, Islamic prayer times depend on the place where the person is situated. It is possible to automatically schedule prayer times based on the person's location and to reschedule these prayer times when this person moves from a place to another place.

### Scheduling to observe locations of objects in the sky

If a person wants to observe a specific object in the sky (the moon, or a planet, or a star, or even an artificial satellite, ...), depending on the date, time and the person's location on earth, the object will appear at different times or in different celestial positions ... The present invention allows a person to schedule actions that depend on his geographic position of earth in a manner that it is possible for him to discover, identify and view objects in the sky.

### Hinduism

From: ***http:*//*www.hinduism.co.za*/*food.htm***

*"One should eat only such food* as *is not forbidden in the scriptures, abstaining from food of every kind on days of the new moon and the full moon."*

When a traveling Hindu would like to go out to have a dinner with a friend, it would be possible to schedule such an event. By means of the present invention, based on the person's current physical location, it is possible to determine and inform the user if there will be a full moon or a new moon, in which case the dinner might be rescheduled to a different day.

### Sun rise / sun set

Events related to sun rise and sun set can be scheduled and automatically rescheduled based on the user's current new physical location.

### Fishing

It could be better to go fishing at a certain time of the day depending on sun's position. The sun's position varies with time based on the person's physical location on earth. Thus the schedule for fishing will be dependent on the location and it can be automatically rescheduled based on the user's current new physical location.

What has been described is merely illustrative of the application of the principles of the present invention. Other arrangements and methods can be implemented by those skilled in the art without departing from the scope of the present invention.

## Claims

1. A method for scheduling tasks including mobile tasks (105) having to be executed by a mobile user (220) when conditions related to the mobile user's physical location are met, said method **characterized in that** it comprises the steps of :
• defining one or a plurality of fixed and/or mobile tasks
• a fixed task (104) being a task with a fixed starting time in a specific time zone and a fixed duration;
• a mobile task (105) being a task depending on the mobile user's physical location with a starting time based on the mobile user's physical location.
• associating with each mobile task (105), one or a plurality of task conditions (205), each task condition comprising one or a plurality of task parameters related to the mobile user's physical location;
for each definition of a new task, or upon an occurrence of an event affecting at least one task parameter or at reception of a mobile user's command :
• determining the current mobile user's physical location;
• determining the time zone corresponding to the mobile user's physical location;
• for each task condition;
• determining the task parameters related to the user's physical location;
• determining according to said task parameters, whether or not the task condition is met;
• for each mobile task (105), when all associated task conditions are met:
• computing the local time for the execution of the mobile task (105);
• scheduling the mobile task (105).

2. The method according to the preceding claim comprising the step of defining one or a plurality of tasks, comprises the further step of :
• defining for each task, a task priority, in case of conflict in the scheduling of several tasks of different priorities, tasks of higher priority being scheduled before tasks of lower priority

3. The method according to the preceding claim comprising the steps of :
• if several tasks must be executed at the same time
• scheduling tasks of higher priority before tasks of lower priority;
• delaying or rescheduling tasks of lower priority.

4. The method according to any one of the preceding claims comprising the steps of :
• detecting a change in the mobile user's physical location;
when a change in the mobile user's location is detected :
• determining the new current mobile user's physical location;
• determining the time zone corresponding to the mobile user's physical location;
• for each task condition;
• determining the task parameters related to the user's physical location;
• determining according to said task parameters, whether or not the task condition is met;
• updating the schedule of each task, said step comprising for each mobile task, the steps of:
• computing the local time at which the mobile task must be executed;
• scheduling the mobile task when all associated task conditions are met;
• canceling the schedule of the mobile task when at least one associated task condition is not met.

5. The method according to any one of the preceding claims wherein the step of determining the current mobile user's physical location, comprises the further step of:
• determining current geographic coordinates of the mobile user from information transmitted via a wireless network (102) to a wireless mobile device (101), said wireless mobile device being in possession of the mobile user

6. The method according to the receding claim wherein the step of determining current geographic coordinates of the mobile user from information transmitted via a wireless network to a wireless mobile device, comprises the further step of:
• identifying the cell of the wireless network (102) corresponding to the physical location of the wireless mobile device (101) in possession of the mobile user, a wireless network comprising of a plurality of cells geographically spread out;
• determining the current geographic coordinates of the mobile user from the identified cell.

7. The method according to ant one of claims 1 to 4 wherein the step of determining the current mobile user's physical location, comprises the further step of
• determining current geographic coordinates of the mobile user from information retrieved from a Global Positioning System (108).

8. The method according to any one of the preceding claims wherein the step of determining the current mobile user's physical location; comprises the step of :
• determining :
• location name,
• longitude and latitude of the location, and
• the time zone corresponding to the location.

9. The method according to any one of the preceding claims wherein tasks are scheduled on an electronic agenda or calendar.

10. The method according to any one of the preceding claims wherein the step of defining a task, comprises the steps of:
• defining for each mobile task (105):
• means for identifying the task;
• one or a plurality of task conditions that have to be met to schedule the a task;
• a task priority, tasks of higher priority being scheduled before tasks of lower priority;
• a task duration during which the task can be performed when all associated conditions are met.
• defining for each task condition associated with a task :
• a condition duration during which the condition is valid.

11. The method according to any one of the preceding claims wherein the step of determining for each condition, the task parameters related to the user's location, comprises the further step of:
• retrieving information related to one or a plurality of said task parameters from an information provider (607).

12. The method according to any one of the preceding claims wherein said method is used to automatically schedule astronomically determined tasks (610, 605)

13. A system comprising means adapted for carrying out the steps of the method according to any one of the preceding claims.

14. The system according to the preceding claim wherein said system comprises:
• means for determining the physical location of a mobile user;
• an automated personal notification system configured to automatically transmit a message based on the physical location of the mobile user, and
• an automated personal scheduling system for processing the received message used to schedule or reschedule the one or plurality of mobile user's tasks.

15. A computer program comprising instructions for carrying out the steps of the method according to any one of claims 1 to 12, when said computer program is executed on a computer system.

## Patentansprüche

1. Verfahren zum Planen von Aufgaben, darunter bewegliche Aufgaben (105), die durch einen mobilen Benutzer (220) auszuführen sind, wenn die Bedingungen in Bezug auf den physischen Standort des mobilen Benutzers erfüllt sind, wobei das Verfahren **dadurch gekennzeichnet ist, dass** es die folgenden Schritte umfasst:
- Definieren einer oder einer Vielzahl fester und/oder beweglicher Aufgaben;
- wobei eine feste Aufgabe (104) eine Aufgabe mit einer festen Anfangszeit in einer bestimmten Zeitzone und einer festen Dauer ist;
- eine bewegliche Aufgabe (105) eine Aufgabe ist, die von dem physischen Standort des mobilen Benutzers abhängig ist, wobei eine Anfangszeit auf dem physischen Standort des mobilen Benutzers beruht;
- Zuordnen von einer oder einer Vielzahl von Aufgabenbedingungen zu jeder beweglichen Aufgabe (105), wobei jede Aufgabenbedingung einen oder eine Vielzahl von Aufgabenparametern in Bezug auf den physischen Standort des mobilen Benutzers umfasst.
für jede Definition einer neuen Aufgabe oder beim Auftreten eines Ereignisses, das wenigstens einen Aufgabenparameter beeinflusst, oder beim Empfangen eines Befehls des mobilen Benutzers:
- Ermitteln des aktuellen physischen Standorts des mobilen Benutzers;
- Ermitteln der Zeitzone, die dem physischen Standort des mobilen Benutzers entspricht;
- für jede Aufgabenbedingung
- Ermitteln der Aufgabenparameter in Bezug auf den physischen Standort des Benutzers;
- gemäß den Aufgabenparametern Ermitteln, ob die Aufgabenbedingung erfüllt ist;
- für jede bewegliche Aufgabe (105), wenn alle zugehörigen Aufgabenbedingungen erfüllt sind
- Berechnen der Lokalzeit für die Ausführung der beweglichen Aufgabe (105);
- Planen der beweglichen Aufgabe (105).

2. Verfahren nach dem vorhergehenden Anspruch, das den Schritt des Definierens einer oder einer Vielzahl von Aufgaben umfasst, wobei das Verfahren ferner die folgenden Schritte umfasst:
- für jede Aufgabe Definieren einer Aufgabenpriorität, wenn ein Konflikt bei der Planung der verschiedenen Aufgaben mit unterschiedlichen Prioritäten vorhanden ist, wobei Aufgaben mit höherer Priorität vor Aufgaben mit niedrigeren Prioritäten geplant werden.

3. Verfahren nach dem vorhergehenden Anspruch, das die folgenden Schritte umfasst:
- wenn mehrere Aufgaben zur gleichen Zeit ausgeführt werden müssen:
- Planen von Aufgaben mit höherer Priorität vor Aufgaben mit niedrigerer Priorität;
- Verzögern oder Neuplanen von Aufgaben mit niedrigerer Priorität.

4. Verfahren nach einem der vorhergehenden Ansprüche, das die folgenden Schritte umfasst:
- Erfassen einer Veränderung bei dem physischen Standort des mobilen Benutzers;
wenn eine Veränderung bei dem physischen Standort des mobilen Benutzers erfasst wird:
- Ermitteln des neuen aktuellen physischen Standorts des mobilen Benutzers;
- Ermitteln der Zeitzone gemäß dem physischen Aufenthaltsort des Benutzers
- für jede Aufgabenbedingung
- Ermitteln der Aufgabenparameter in Bezug auf den physischen Standorts des Benutzers;
- gemäß den Aufgabenparameter feststellen, ob die Aufgabenbedingung erfüllt ist;
- Aktualisieren der Planung für jede Aufgabe, wobei der Schritt für jede bewegliche Aufgabe die folgenden Schritte umfasst:
- Berechnen der Lokalzeit, zu der die bewegliche Aufgabe ausgeführt werden muss;
- Planen der beweglichen Aufgabe, wenn alle zugehörigen Aufgabenbedingungen erfüllt sind;
- Löschen der Planung der beweglichen Aufgabe, wenn wenigstens eine zugehörige Aufgabenbedingung nicht erfüllt ist.

5. Verfahren nach einem der vorhergehenden Ansprüche, wobei der Schritt des Ermittelns des aktuellen physischen Standorts des mobilen Benutzers ferner den folgenden Schritt umfasst:
- Ermitteln aktueller geografischer Koordinaten des mobilen Benutzers aus Informationen, die über ein drahtlos betriebenes Netz (102) zu einer drahtlos betriebenen mobilen Einheit (101) übertragen werden, wobei die drahtlos betriebene mobile Einheit im Besitz des mobilen Benutzers ist.

6. Verfahren nach dem vorhergehenden Anspruch, wobei der Schritt des Ermittelns der aktuellen geografischen Koordinaten des mobilen Benutzers aus Informationen, die über ein drahtlos betriebenes Netz an eine drahtlos betriebene mobile Einheit übertragen werden, ferner den folgenden Schritt umfasst:
- Identifizieren der Zelle des drahtlosen Netzes (102), die dem physischen Standort der drahtlos betriebenen mobilen Einheit (101), die sich im Besitz des mobilen Benutzers befindet, entspricht, wobei ein drahtlos betriebenes Netz eine Vielzahl von Zellen umfasst, die geografisch verteilt sind;
- Ermitteln der aktuellen geografischen Koordinaten des mobilen Benutzers aus der identifizierten Zelle.

7. Verfahren nach einem der Ansprüche 1 bis 4, wobei der Schritt des Ermittelns des aktuellen physischen Standorts des mobilen Benutzers ferner den folgenden Schritt umfasst:
- Ermitteln aktueller geografischer Koordinaten des mobilen Benutzers aus Informationen, die von einem globalen Positionierungssystem (108) abgerufen werden.

8. Verfahren nach einem der vorhergehenden Ansprüche, wobei der Schritt des Ermittelns des aktuellen physischen Standorts des mobilen Benutzers den folgenden Schritt umfasst:
- Ermitteln
- der Standortbezeichnung,
- der geografischen Länge und Breite des Standorts
- der Zeitzone, die dem Standort entspricht.

9. Verfahren nach einem der vorhergehenden Ansprüche, wobei die Aufgaben auf einer elektronischen Agenda oder einem elektronischen Kalender geplant werden.

10. Verfahren nach einem der vorhergehenden Ansprüche, wobei der Schritt des Definierens einer Aufgabe die folgenden Schritte umfasst:
- für jede bewegliche Aufgabe (105) Definieren
- eines Mittels zum Identifizieren der Aufgabe;
- einer oder einer Vielzahl von Aufgabenbedingungen, die zum Planen der Aufgabe erfüllt sein müssen;
- einer Aufgabenpriorität, wobei Aufgaben mit höherer Priorität vor Aufgaben mit niedrigerer Priorität geplant werden;
- einer Aufgabendauer, während der die Aufgabe ausgeführt werden kann, wenn alle zugehörigen Bedingungen erfüllt sind;
- für jede Aufgabenbedingung, die einer Aufgabe zugehörig ist, Definieren
- einer Bedingungsdauer, während der die Bedingung gültig ist.

11. Verfahren nach einem der vorhergehenden Ansprüche, wobei der Schritt des Bestimmens der Aufgabenparameter in Bezug auf den Standort des Benutzers für jede Bedingung ferner den folgenden Schritt umfasst:
- Abrufen von Informationen in Bezug auf einen oder eine Vielzahl von Aufgabenparameter von einem Informationsanbieter (607).

12. Verfahren nach einem der vorhergehenden Ansprüche, wobei das Verfahren verwendet wird, um astronomisch bestimmte Aufgaben (610, 605) automatisch zu planen.

13. System, das ein Mittel umfasst, das in der Lage ist, die Schritte des Verfahrens nach einem der vorhergehenden Ansprüche auszuführen.

14. System nach dem vorhergehenden Anspruch, wobei das System umfasst:
- ein Mittel zum Ermitteln des physischen Standorts eines mobilen Benutzers;
- ein automatisiertes persönliches Benachrichtigungssystem, das so konfiguriert ist, dass es eine Nachricht auf der Grundlage des physischen Standorts des mobilen Benutzers automatisch überträgt, und
- ein automatisiertes persönliches Planungssystem zum Verarbeiten der empfangenen Nachricht, das verwendet wird, um die eine oder die mehreren Aufgaben des mobilen Benutzers zu planen oder neu zu planen.

15. Computerprogramm, das Befehle umfasst, um die Schritte des Verfahrens nach einem der Ansprüche 1 bis 12 auszuführen, wenn das Computerprogramm auf einem Computersystem ausgeführt wird.

## Revendications

1. Procédé de planification de tâches comprenant des tâches mobiles (105) devant être exécutées par un utilisateur mobile (220) lorsque des conditions associées à l'emplacement physique de l'utilisateur mobile sont satisfaites, ledit procédé étant **caractérisé en ce qu'**il comprend les étapes consistant à :
• définir une ou une pluralité de tâches parmi des tâches fixes et/ou mobiles
• une tâche fixe (104) étant une tâche qui présente une heure de début fixe dans une zone horaire spécifique et une durée fixe,
• une tâche mobile (105) étant une tâche qui dépend de l'emplacement physique de l'utilisateur mobile, présentant une heure de début fondée sur l'emplacement physique de l'utilisateur mobile.
• associer à chaque tâche mobile (105) une ou plusieurs conditions de tâche (205), chaque condition de tâche comprenant un paramètre d'une pluralité de paramètres de tâche associés à l'emplacement physique de l'utilisateur mobile,
pour chaque définition d'une nouvelle tâche, ou à la survenue d'un événement affectant au moins un paramètre de tâche ou à la réception d'un ordre de l'utilisateur mobile :
• déterminer l'emplacement physique actuel de l'utilisateur mobile,
• déterminer la zone horaire correspondant à l'emplacement physique de l'utilisateur mobile,
• pour chaque condition de tâche,
• déterminer les paramètres de tâche associés à l'emplacement physique de l'utilisateur,
• déterminer conformément auxdits paramètres de tâche, si la condition de la tâche est satisfaite ou non,
• pour chaque tâche mobile (105), lorsque toutes les conditions de tâche associées sont satisfaites :
• calculer l'heure locale pour l'exécution de la tâche mobile (105),
• planifier la tâche mobile (105).

2. Procédé selon la revendication précédente comprenant l'étape consistant à définir une tâche ou une pluralité de tâches, comprenant l'étape supplémentaire consistant à :
• définir pour chaque tâche une priorité de tâche, en cas de conflit dans la planification de plusieurs tâches présentant des priorités différentes, les tâches présentant des priorités plus hautes étant planifiées avant les tâches présentant des priorités plus basses.

3. Procédé selon la revendication précédente, comprenant les étapes consistant à :
• si plusieurs tâches doivent être exécutées en même temps :
• planifier les tâches présentant des priorités plus hautes avant les tâches présentant des priorités plus basses,
• retarder ou replanifier les tâches présentant des priorités plus basses,

4. Procédé selon l'une quelconque des revendications précédentes, comprenant les étapes consistant à :
• détecter un changement de l'emplacement physique de l'utilisateur mobile,
lorsqu'un changement de l'emplacement de l'utilisateur mobile est détecté :
• déterminer le nouvel emplacement physique actuel de l'utilisateur mobile,
• déterminer la zone correspondant à l'emplacement physique de l'utilisateur mobile,
• pour chaque condition de tâche,
• déterminer les paramètres de tâche associés à l'emplacement physique de l'utilisateur,
• déterminer conformément auxdits paramètres de tâche, si la condition de la tâche est satisfaite ou non,
• mettre à jour le planning de chaque tâche, ladite étape comprenant pour chaque tâche mobile, les étapes consistant à :
• calculer l'heure locale à laquelle la tâche mobile doit être exécutée,
• planifier la tâche mobile lorsque toutes les conditions de tâche associées sont satisfaites,
• annuler le planning de la tâche mobile lorsqu'au moins une condition de tâche associée n'est pas satisfaite.

5. Procédé selon l'une quelconque des revendications précédentes, dans lequel l'étape consistant à déterminer l'emplacement physique actuel de l'utilisateur mobile comprend l'étape supplémentaire consistant à :
• déterminer les coordonnées géographiques actuelles de l'utilisateur mobile à partir d'informations transmises par le biais d'un réseau sans fil (102) à un dispositif mobile sans fil (101), ledit dispositif mobile sans fil étant en possession de l'utilisateur mobile.

6. Procédé selon la revendication précédente, dans lequel l'étape consistant à déterminer les coordonnées géographiques actuelles de l'utilisateur mobile à partir d'informations transmises par l'intermédiaire d'un réseau sans fil à un dispositif mobile sans fil, comprend l'étape supplémentaire consistant à :
• identifier la cellule du réseau sans fil (102) correspondant à l'emplacement physique du dispositif mobile sans fil (101) en possession de l'utilisateur mobile, un réseau sans fil comprenant une pluralité de cellules réparties géographiquement,
• déterminer les coordonnées géographiques actuelles de l'utilisateur mobile à partir de la cellule identifiée.

7. Procédé selon l'une quelconque des revendications 1 à 4, dans lequel l'étape de détermination de l'emplacement physique actuel de l'utilisateur mobile, comprend l'étape supplémentaire consistant à :
• déterminer les coordonnées géographiques actuelles de l'utilisateur mobile à partir d'informations récupérées à partir d'un système de positionnement mondial (108).

8. Procédé selon l'une quelconque des revendications précédentes, dans lequel l'étape consistant à déterminer l'emplacement physique actuel de l'utilisateur mobile comprend l'étape consistant à :
• déterminer :
• le nom de l'emplacement,
• la longitude et la latitude de l'emplacement, et
• la zone horaire correspondant à l'emplacement.

9. Procédé selon l'une quelconque des revendications précédentes, dans lequel les tâches sont planifiées sur un agenda ou un calendrier électronique.

10. Procédé selon l'une quelconque des revendications précédentes, dans lequel l'étape de définition d'une tâche comprend les étapes consistant à :
• définir pour chaque tâche mobile (105) :
• un moyen destiné à identifier la tâche,
• une ou une pluralité de conditions de tâche qui doivent être satisfaites pour planifier la tâche,
• une priorité de tâche, les tâches présentant des priorités plus hautes étant planifiées avant les taches présentant des priorités plus basses,
• une durée de tache au cours de laquelle la tâche peut être exécutée lorsque toutes les conditions associées sont satisfaites,
• définir pour chaque condition de tâche associée à une tâche :
• une durée de condition au cours de laquelle la condition est valide.

11. Procédé selon l'une quelconque des revendications précédentes, dans lequel l'étape consistant à déterminer pour chaque condition les paramètres de tâche associés à l'emplacement de l'utilisateur comprend l'étape supplémentaire consistant à :
• récupérer des informations associées à un paramètre ou à une pluralité de paramètres parmi lesdits paramètres de tâche à partir d'un fournisseur d'informations (607).

12. Procédé selon l'une quelconque des revendications précédentes, dans lequel ledit procédé est utilisé pour planifier automatiquement des tâches déterminées de manière astronomique (610, 605).

13. Système comprenant un moyen conçu pour exécuter les étapes du procédé selon l'une quelconque des revendications précédentes.

14. Système selon la revendication précédente, dans lequel ledit système comprend :
• un moyen destiné à déterminer l'emplacement physique d'un utilisateur mobile,
• un système de notification personnel automatisé configuré pour transmettre automatiquement un message sur la base de l'emplacement physique de l'utilisateur mobile, et
• un système de planification personnel automatisé destiné à traiter le message reçu utilisé pour planifier ou replanifier les une ou plusieurs tâches de l'utilisateur mobile.

15. Programme informatique comprenant des instructions, destiné à exécuter les étapes du procédé selon l'une quelconque des revendications 1 à 12, lorsque ledit programme informatique est exécuté sur un système informatique.
